# EUROPÄISCHE PATENTSCHRIFT

(11) **EP 3 075 282 B1**
(45) Veröffentlichungstag und Bekanntmachung des Hinweises auf die Patenterteilung: **23.05.2018**
(21) Anmeldenummer: 16000732.4
(22) Anmeldetag: 30.03.2016
(51) Int. Cl.: A47C 21/04, B62D 33/06

(54) **LIEGE IN EINEM FAHRERHAUS EINES NUTZFAHRZEUGS**
LOUNGER IN A DRIVER'S CAB OF A COMMERCIAL VEHICLE
COUCHETTE DANS UNE CABINE DE CONDUCTEUR D'UN VEHICULE UTILITAIRE

(30) Priorität: 31.03.2015 DE 102015004217
(43) Veröffentlichungstag der Anmeldung: 05.10.2016
(73) Patentinhaber: MAN Truck & Bus AG, 80995 München (DE)
(72) Erfinder: Gündogdu, Oguzhan, 85221 Dachau (DE); Siflinger, Markus, 85604 Zorneding (DE)
(74) Vertreter: Liebl, Thomas

(56) Entgegenhaltungen:
- WO-A1-2005/120295
- CN-U- 202 959 631
- DE-A1- 19 931 193
- US-A1- 2005 278 863
- US-A1- 2009 000 031

## Beschreibung

Die Erfindung betrifft ein Fahrerhaus mit Liege und eine Fahrzeug-Klimaanlage nach dem Oberbegriff des Anspruchs 1.

Für Lenker eines Nutzfahrzeugs schreibt das Gesetz genaue Lenkzeiten und exakt einzuhaltende Ruhephasen vor. Für den Fernverkehr ist daher wenigstens eine Liege in einem Fahrerhaus eines Nutzfahrzeugs erforderlich. Da inzwischen meist nur noch ein Fahrer unterwegs ist, besteht der Trend, eine Fahrerhauskabine mit nur einer Liege auszurüsten, welche Gelegenheit zum ausgedehnten Schlafen oder zum kurzen Ausruhen bietet.

In allgemein bekannter Weise ist bei einer solchen Liege eine Liegefläche für eine Person durch eine Matratze gebildet, welche auf einem Matratzenunterbau aufliegt.

Für einen guten ergonomischen Liegekomfort ist zudem bereits als Matratzenunterbau ein Alu-Rahmen mit Lattenrost bekannt, wobei der Lattenrost fünf Zonen unterschiedlicher Federhärte aufweist und die daraufliegende Matratze als Kaltschaumstoffmatratze ausgebildet ist.

Weiter sind unterschiedliche Liegenanordnungen, insbesondere herstellerspezifisch bekannt. In der klassischen Anordnung sind eine oder zwei Liegen hinter und gegebenenfalls über den Frontsitzen zum Teil auch klappbar vor der Kabinenrückwand angebracht.

Die Dokumente WO 2005/120295 A1 und US 2009/0000031 A1 beschreiben den bisherigen Stand der Technik, der für das Verständnis der Erfindung als nützlich angesehen werden kann. Ein guter ergonomischer Liegekomfort während der Ruhephasen trägt bekanntlich zum Erhalt der Konditionssicherheit eines Fahrers bei.

Aufgabe der Erfindung ist es daher, eine gattungsgemäße Liege in einem Fahrerhaus eines Nutzfahrzeugs so weiterzubilden, dass ein besonders guter Liegekomfort zur Verfügung gestellt wird.

Diese Aufgabe wird gelöst mit den Merkmalen der unabhängigen Patentansprüche. Vorteilhafte Ausgestaltungen sind Gegenstand der darauf rückbezogenen Unteransprüche.

Erfindungsgemäß ist unter anderem vorgesehen, dass der Matratzenunterbau eine Klimatisierungseinrichtung zur aktiven Klimatisierung der Liegefläche aufweist.

Nutzfahrzeuge insbesondere für den Fernverkehr sind regelmäßig mit Fahrzeug-Klimaanlagen für die Fahrerhauskabine ausgerüstet, mit der die Umgebungstemperatur im Innenraum durch Heizen oder Kühlen geregelt werden kann. Eine solche Umgebungstemperatur wirkt sich nicht unmittelbar und gegebenenfalls nur zeitversetzt auf die Liegeflächentemperatur der Liege aus. Zudem sind die individuellen Temperaturwünsche für einen angenehmen Schlaf unterschiedlich. Beispielsweise kann für einen erholsamen Schlaf eine relativ warme Liegefläche in Kombination mit einer vergleichsweise geringeren Umgebungstemperatur förderlich sein. Solche individuellen Wünsche und Einstellungen können mit der erfindungsgemäßen Klimatisierungseinrichtung erfüllt werden, welche zusätzlich und in ihrer Auswirkung weitgehend unabhängig von der Fahrzeug-Klimaanlage betrieben werden kann. Insgesamt werden damit individuell und personenbezogene Liegetemperatureinstellungen möglich, die jeweils einen angenehmen Schlaf oder angenehme Ruhezeiten ermöglichen.

In einer einfachen, kostengünstigen Anordnung kann der Matratzenunterbau lediglich durch eine aufbauseitige horizontale Matratzen-Abstützwand hinter den Sitzen gebildet sein, auf der die Matratze direkt aufliegt.

Komfortabler und ergonomisch günstiger ist ein Matratzenunterbau mit einem Matratzenrahmen als Bettrahmen, der auf einer aufbauseitigen horizontalen Matratzenrahmen-Tragwand des Fahrerhauses aufliegt und/oder mittels Stützelementen, insbesondere klappbar mittels Scharnierelementen gehalten ist. In einer Kombination sind damit auch zwei übereinander angeordnete Liegen möglich.

Der Matratzenrahmen kann einen Lattenrost aufweisen, bevorzugt mit unterschiedlichen Härtezonen, bei dem querverlaufende Latten durch Zwischenräume beabstandet sind, durch die Luft zirkulieren kann. Erfindungsgemäß weist der Matratzenunterbau einen gesteuert betreibbaren Lüfter zur Luftförderung als Bestandteil der Klimatisierungseinrichtung auf. Dazu ist zweckmäßig eine Lüfteranordnung mit mehreren, zum Beispiel drei, über die Matratzenlänge versetzten Lüftern vorgesehen, wobei die Lüfter senkrecht zur Liegefläche gerichtete Lüfterdrehachsen mit einem Lüftdurchmesser etwa entsprechend der Matratzenbreite aufweisen.

Ein oder mehrere Lüfter können dazu in einen Matratzenrahmen integriert sein und dabei bevorzugt unter einem Lattenrost eines Matratzenrahmens angeordnet sein. Alternativ oder zusätzlich können auch ein oder mehrere Lüfter aufbauseitig in eine Matratzen-Abstützwand oder in eine Matratzenrahmen-Tragwand integriert sein.

Mit solchen Lüftern in Verbindung mit einer geeigneten Lüfteranordnung kann Warmluft oder Kaltluft oder Umgebungsluft gezielt für eine aktive Klimatisierung der Liegefläche unter der Matratze gefördert werden.

Für eine solche aktive Lüftung oder Kühlung oder Heizung sind erfindungsgemäß die Lüfter steuerbar und lüftereingangsseitig an die Fahrzeug-Klimaanlage angeschlossen sowie lüfterausgangsseitig auf die Matratze gerichtet. Damit können die Funktionen der Fahrzeug-Klimaanlage gesteuert und weitgehend unabhängig auch für die Klimatisierungseinrichtung im Matratzenunterbau genutzt werden. Insbesondere können damit eine Standheizungsfunktion, eine Restwärmenutzung, etc. auch für die Klimatisierung der Liegefläche verwendet werden.

Alternativ oder zusätzlich können auch steuerbare Heizelemente, insbesondere PTC-Heizelemente im Lüfterstrombereich und/oder im Matratzenkern vorgesehen sein. Insgesamt ist damit eine gezielte Klimatisierung der Liegefläche möglich.

Die Matratze wird zweckmäßig mit einem Schaumstoffkern ausgeführt, wobei im Schaumstoff Luftleitkonturen zur Verteilung der Luftströme angebracht sein können.

In einer besonders bevorzugten Ausführungsform mit mehreren Lüftern ist jeder Lüfter einem Liegebereich, insbesondere einem Kopfbereich, einem Rumpfbereich und einem Fußbereich zugeordnet und kann separat hinsichtlich seiner Lüftungs-, Kühlungs- oder Heizfunktion sowie seiner Förderfunktion geregelt werden. Die Vorgaben für eine solche Regelung können dabei individuell über ein Bedienmodul oder über eine Fernbedienung wählbar sein.

Durch diese Art der getrennten Regelung können beispielsweise der Kopf- und Rumpfbereich gekühlt und der Fußbereich beheizt werden.

Anhand einer Zeichnung wird die Erfindung weiter erläutert.

Es zeigen:
- Fig. 1: eine perspektivische Sicht in ein Fahrerhaus eines Nutzfahrzeugs mit einer Liege, und
- Fig. 2: eine schematische, perspektivische Darstellung eines Matratzenrahmens mit aktiver Lüftungs-, Kühlungs- und Heizungsfunktion.

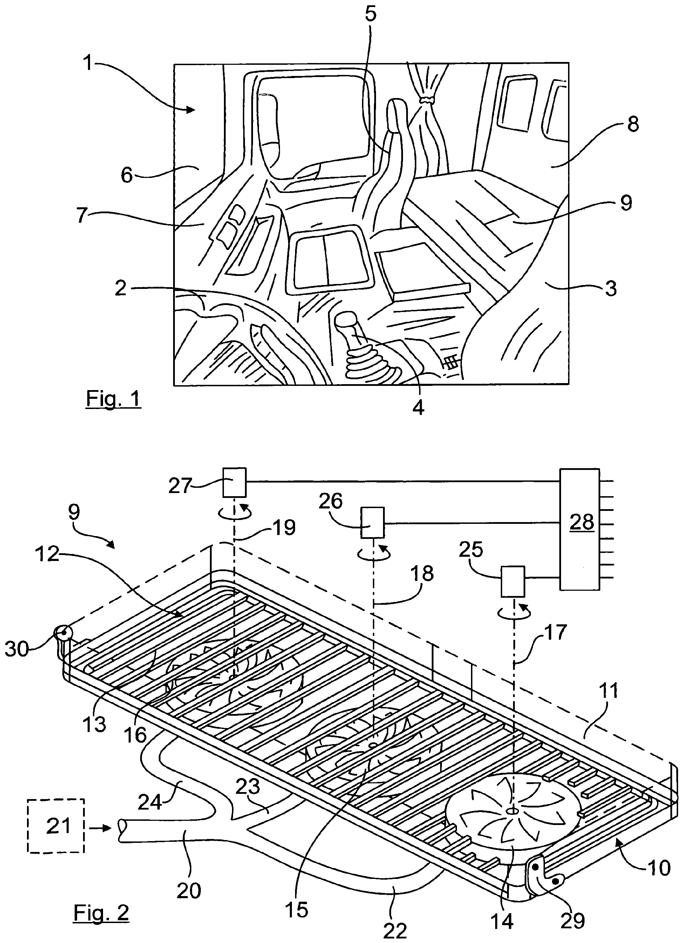

In Fig. 1 ist ein Blick in eine Fahrerhauskabine 1 eines LKW für den Fernverkehr gezeigt mit einem Lenkrad 2, einem Fahrersitz 3, einem Schalthebel 4, einem Beifahrersitz 5, einer Frontscheibe 6 und einer Instrumententafel 7. Hinter dem Fahrersitz 3 und dem Beifahrersitz 5 ist angrenzend an eine Kabinenrückwand 8 eine Liege 9 angebracht, welche in Verbindung mit Fig. 2 weiter erläutert wird.

In Fig. 2 ist schematisch und teilweise geschnitten die Liege 9, bestehend aus einem Matratzenrahmen 10 und einer strichliert angedeuteten Schaumstoffmatratze 11 gezeigt. Der Matratzenrahmen 10 weist einen Lattenrost 12 mit jeweils beabstandeten, querverlaufenden Latten 13 auf.

Im Matratzenrahmen 10 sind als Bestandteil einer Klimatisierungseinrichtung drei in Längsrichtung angeordnete Lüfter 14, 15, 16 angeordnet, deren Lüfterdrehachsen 17, 18, 19 jeweils senkrecht zum Matratzenrahmen 10 ausgerichtet sind. Die Lüfter 14, 15, 16 haben einen Durchmesser, der weitgehend der Breite des Matratzenrahmens 10 entspricht, so dass deren Lüfterauslass weitgehend die Unterfläche der Schaumstoffmatratze 10 überdeckt und damit jeweils ein Lüfter 14, 15, 16 einem Kopfbereich, einem Rumpfbereich und einem Fußbereich zugeordnet ist. Zur verbesserten Darstellung ist im Bereich oberhalb des Lüfters 14 der Lattenrost 12 durchbrochen dargestellt.

Die Lüfter 14, 15, 16 sind strömungsmäßig über eine Leitung 20 an eine FahrzeugKlimaanlage 21 angeschlossen. Die Leitung 20 verzweigt sich in drei Leitungen 22, 23, 24, die jeweils lüftereingangsseitig an die zugeordneten Lüfter 14, 15, 16 angeschlossen sind. In den Leitungen 20, 22, 23, 24 können (nicht dargestellte) steuerbare Stellelemente für die gesteuerte Zuführung von Warmluft und/oder Kaltluft angeordnet sein.

Weiter sind schematisch elektrische Antriebsmotoren 25, 26, 27 für die Lüfter 14, 15, 16 angedeutet, deren Drehzahl mit einer Steuerung 28 entsprechend dort eingegebener Steuerbefehle und/oder Temperatur-Sollwerte sowie erfasster Temperatur-Istwerte gesteuert/geregelt werden kann.

Die Luftverteilung im Bereich unter der Schaumstoffmatratze kann durch dort eingebrachte (nicht dargestellte) Luftleitkanäle durchgeführt und beeinflusst werden. Weiter können (nicht dargestellte) steuerbare Heizelemente, insbesondere PTC-Heizelemente in den Lüfterstrombereichen und/oder in der Schaumstoffmatratze 11 unterhalb der Liegenoberfläche angebracht sein.

Der in Fig. 2 dargestellte Matratzenrahmen kann mit an gegenüberliegenden Ecken angebrachten Scharnierelementen 29, 30 klappbar mit dem Aufbau der Fahrerhauskabine verbunden werden.

### Bezugszeichenliste

- 1: Fahrerhauskabine
- 2: Lenkrad
- 3: Fahrersitz
- 4: Schalthebel
- 5: Beifahrersitz
- 6: Frontscheibe
- 7: Instrumententafel
- 8: Kabinenrückwand
- 9: Liege
- 10: Matratzenrahmen
- 11: Schaumstoffmatratze
- 12: Lattenrost
- 13: Latten
- 14: Lüfter
- 15: Lüfter
- 16: Lüfter
- 17: Lüfterdrehachse
- 18: Lüfterdrehachse
- 19: Lüfterdrehachse
- 20: Leitung
- 21: Fahrzeugklimaanlage
- 22: Leitung
- 23: Leitung
- 24: Leitung
- 25: Antriebsmotor
- 26: Antriebsmotor
- 27: Antriebsmotor
- 28: Steuerung
- 29: Scharnierelement
- 30: Scharnierelement

## Patentansprüche

1. Fahrerhaus eines Nutzfahrzeuges mit einer Liege (9) in dem Fahrerhaus, sowie einer Fahrzeug-Klimaanlage (21), wobei eine Liegefläche für eine Person durch eine Matratze (11) gebildet ist, die auf einem Matratzenunterbau (10) aufliegt,
**dadurch gekennzeichnet,**
**dass** der Matratzenunterbau (10) eine Klimatisierungseinrichtung (14, 15, 16) zur aktiven Klimatisierung der Liegefläche (11) aufweist,
**dass** der Matratzenunterbau als Bestandteil der Klimatisierungseinrichtung wenigstens einen gesteuert betreibbaren Lüfter (14, 15, 16) zur Luftförderung aufweist, und dass für eine aktive Lüftung oder Kühlung oder Heizung der wenigstens eine Lüfter (14, 15, 16) steuerbar lüftereingangsseitig an die Fahrzeug-Klimaanlage (21) angeschlossen ist und lüfterausgangsseitig auf die Matratze (11) gerichtet ist.

2. Fahrerhaus mit Liege und Fahrzeug-Klimaanlage nach Anspruch 1, **dadurch gekennzeichnet, dass** der Matratzenunterbau durch eine aufbauseitige horizontale Matratzen-Abstützwand gebildet ist, auf der die Matratze (11) aufliegt.

3. Fahrerhaus mit Liege und Fahrzeug-Klimaanlage nach Anspruch 1, **dadurch gekennzeichnet, dass** der Matratzenunterbau ein Matratzenrahmen (10) als Bettrahmen ist, der auf einer aufbauseitigen horizontalen Matratzenrahmen-Tragwand des Fahrerhauses aufliegt und/oder mittels Stützelementen, insbesondere mittels Scharnierelementen (29, 30) klappbar gehalten ist.

4. Fahrerhaus mit Liege und Fahrzeug-Klimaanlage nach Anspruch 3, **dadurch gekennzeichnet, dass** der Matratzenrahmen (10) einen Lattenrost (12) aufweist mit durch Zwischenräume beabstandeten, quer verlaufenden Latten (13).

5. Fahrerhaus mit Liege und Fahrzeug-Klimaanlage nach einem der vorhergehenden Ansprüche, **dadurch gekennzeichnet, dass** eine Lüfteranordnung in Längsrichtung mit mehreren Lüftern (14, 15, 16) vorgesehen ist, wobei die Lüfter (14, 15, 16) senkrecht zur Liegefläche gerichtete Lüfterdrehachsen (17, 18, 19) mit einem Lüfterdurchmesser etwa entsprechend der Liegeflächenbreite aufweisen.

6. Fahrerhaus mit Liege und Fahrzeug-Klimaanlage nach einem der vorhergehenden Ansprüche, **dadurch gekennzeichnet, dass** ein oder mehrere Lüfter (14, 15, 16) in einen Matratzenrahmen (10) integriert sind, insbesondere unter einem Lattenrost (12) eines Matratzenrahmens (10) angeordnet sind, und/oder
dass ein oder mehrere Lüfter aufbauseitig in eine Matratzen-Abstützwand oder in eine Matratzenrahmen-Tragwand integriert sind.

7. Fahrerhaus mit Liege und Fahrzeug-Klimaanlage nach einem der vorhergehenden Ansprüche, **dadurch gekennzeichnet, dass** zusätzlich steuerbare Heizelemente, insbesondere PTC-Heizelemente, im Lüfterstrombereich und/oder im Matratzenkern vorgesehen sind.

8. Fahrerhaus mit Liege und Fahrzeug-Klimaanlage nach einem der vorhergehenden Ansprüche, **dadurch gekennzeichnet, dass** die Matratze (11) mit einem Schaumstoffkern ausgeführt ist und im Schaumstoff Luftleitkonturen zur Verteilung der Lüfterströme angebracht sind.

9. Fahrerhaus mit Liege und Fahrzeug-Klimaanlage nach einem der vorhergehenden Ansprüche, **dadurch gekennzeichnet, dass** bei mehreren Lüftern (13, 14, 15) jeder der Lüfter (13, 14, 15) einem Liegebereich, insbesondere einem Kopfbereich, Rumpfbereich und Fußbereich, zugeordnet ist, und
dass jeder Lüfter (13, 14, 15) getrennt hinsichtlich seiner Lüftungs-, Kühlungs- oder Heizfunktion sowie seiner Förderunktion regelbar ist.

10. Fahrerhaus mit Liege und Fahrzeug-Klimaanlage nach Anspruch 9, **dadurch gekennzeichnet, dass** die Vorgaben für die Regelung/Steuerung (20) individuell über ein Bedienmodul oder eine Fernbedienung wählbar sind.

11. Nutzfahrzeug mit einem Fahrerhaus und einer Fahrzeug-Klimaanlage (21) nach einem der vorhergehenden Ansprüche.

## Claims

1. Driver's cab of a commercial vehicle with a bunk (9) in the driver's cab, and with a vehicle air-conditioning system (21), wherein a reclining surface for a person is formed by a mattress (11) which rests on a mattress substructure (10), **characterized in that** the mattress substructure (10) has an air-conditioning device (14, 15, 16) for the active air-conditioning of the reclining surface (11), **in that** the mattress substructure has, as part of the air-conditioning device, at least one fan (14, 15, 16) which is operable in a controlled manner and is intended for conveying air, and **in that**, for active ventilation or cooling or heating, the at least one fan (14, 15, 16) is connected in a controllable manner on the fan input side to the vehicle air-conditioning system (21) and on the fan output side is directed onto the mattress (11).

2. Driver's cab with bunk and vehicle air-conditioning system according to Claim 1, **characterized in that** the mattress substructure is formed by a body-side, horizontal mattress-supporting wall, on which the mattress (11) rests.

3. Driver's cab with bunk and vehicle air-conditioning system according to Claim 1, **characterized in that** the mattress substructure is a mattress frame (10) as bed frame, which rests on a body-side, horizontal mattress-frame-carrying wall of the driver's cab and/or is held in a foldable manner by means of support elements, in particular by means of hinge elements (29, 30).

4. Driver's cab with bunk and vehicle air-conditioning system according to Claim 3, **characterized in that** the mattress frame (10) has a slatted base (12) having transversely running slats (13) which are spaced apart by means of intermediate spaces.

5. Driver's cab with bunk and vehicle air-conditioning system according to one of the preceding claims, **characterized in that** a fan arrangement is provided with a plurality of fans (14, 15, 16) in the longitudinal direction, wherein the fans (14, 15, 16) have axes of rotation (17, 18, 19) which are directed perpendicularly to the reclining surface, and a diameter approximately corresponding to the width of the reclining surface.

6. Driver's cab with bunk and vehicle air-conditioning system according to one of the preceding claims, **characterized in that** one or more fans (14, 15, 16) are integrated in a mattress frame (10), in particular are arranged under a slatted base (12) of a mattress frame (10), and/or **in that** one or more fans are integrated on the body side into a mattress-supporting wall or into a mattress-frame-carrying wall.

7. Driver's cab with bunk and vehicle air-conditioning system according to one of the preceding claims, **characterized in that** controllable heating elements, in particular PTC heating elements, are additionally provided in the fan flow region and/or in the mattress core.

8. Driver's cab with bunk and vehicle air-conditioning system according to one of the preceding claims, **characterized in that** the mattress (11) is designed with a foam core, and air-guiding contours for distributing the air flows are provided in the foam.

9. Driver's cab with bunk and vehicle air-conditioning system according to one of the preceding claims, **characterized in that**, in the case of a plurality of fans (13, 14, 15), each of the fans (13, 14, 15) is assigned a reclining region, in particular a head region, torso region and foot region, and **in that** each fan (13, 14, 15) can be regulated separately in respect of its ventilation, cooling or heating function and its conveying function.

10. Driver's cab with bunk and vehicle air-conditioning system according to Claim 9, **characterized in that** the specifications for the regulation/control (20) can be selected individually via an operating module or a remote control.

11. Commercial vehicle with a driver's cab and a vehicle air-conditioning system (21) according to one of the preceding claims.

## Revendications

1. Cabine de conducteur d'un véhicule utilitaire comprenant une couchette (9) dans une cabine de conducteur ainsi qu'une installation de climatisation du véhicule (21), une surface de couchette pour une personne étant formée par un matelas (11) qui repose sur un support de matelas (10),
**caractérisée**
**en ce que** le support de matelas (10) présente un dispositif de climatisation (14, 15, 16) pour la climatisation active de la surface de couchette (11),
**en ce que** le support de matelas présente, en tant que partie du dispositif de climatisation, au moins un ventilateur (14, 15, 16) pour refouler de l'air, pouvant fonctionner de manière commandée, et
**en ce que** l'au moins un ventilateur (14, 15, 16) est raccordé de manière commandable du côté de l'entrée de ventilateur à l'installation de climatisation du véhicule (21) pour une ventilation ou un refroidissement ou un chauffage et est orienté du côté de la sortie de ventilateur vers le matelas (11).

2. Cabine de conducteur comprenant une couchette et une installation de climatisation de véhicule selon la revendication 1, **caractérisée en ce que** le support de matelas est formé par une paroi de support de matelas horizontale du côté de la structure, sur laquelle repose le matelas (11).

3. Cabine de conducteur comprenant une couchette et une installation de climatisation de véhicule selon la revendication 1, **caractérisée en ce que** le support de matelas est un cadre de matelas (10) en tant que cadre de lit, qui repose sur une paroi de support horizontale de cadre de matelas de la cabine de véhicule du côté de la structure et/ou est fixé de manière rabattable au moyen d'éléments de support, en particulier au moyen d'éléments de charnière (29, 30).

4. Cabine de conducteur comprenant une couchette et une installation de climatisation de véhicule selon la revendication 3, **caractérisée en ce que** le cadre de matelas (10) présente un sommier à lattes (12) avec des lattes (13) s'étendant transversalement, espacées par des espaces intermédiaires.

5. Cabine de conducteur comprenant une couchette et une installation de climatisation de véhicule selon l'une quelconque des revendications précédentes, **caractérisée en ce qu'**un agencement de ventilateurs est pourvu de plusieurs ventilateurs (14, 15, 16) dans la direction longitudinale, les ventilateurs (14, 15, 16) présentant des axes de rotation de ventilateurs orientés perpendiculairement à la surface de la couchette (17, 18, 19) avec un diamètre de ventilateur correspondant approximativement à la largeur de la surface de la couchette.

6. Cabine de conducteur comprenant une couchette et une installation de climatisation de véhicule selon l'une quelconque des revendications précédentes, **caractérisée en ce qu'**un ou plusieurs ventilateurs (14, 15, 16) sont intégrés dans un cadre de matelas (10), en particulier sont disposés sous un sommier à lattes (12) d'un cadre de matelas (10), et/ou
**en ce qu'**un ou plusieurs ventilateurs sont intégrés du côté de la structure dans une paroi de support de matelas ou dans une paroi porteuse de cadre de matelas.

7. Cabine de conducteur comprenant une couchette et une installation de climatisation de véhicule selon l'une quelconque des revendications précédentes, **caractérisée en ce que** des éléments chauffants commandables sont en outre prévus, en particulier des éléments chauffants à CTP, dans la région de flux des ventilateurs et/ou dans le coeur du matelas.

8. Cabine de conducteur comprenant une couchette et une installation de climatisation de véhicule selon l'une quelconque des revendications précédentes, **caractérisée en ce que** le matelas (11) est réalisé avec un coeur en mousse et des contours de guidage d'air sont montés dans la mousse pour répartir les flux des ventilateurs.

9. Cabine de conducteur comprenant une couchette et une installation de climatisation de véhicule selon l'une quelconque des revendications précédentes, **caractérisée en ce que** chacun des ventilateurs (13, 14, 15), lorsqu'il y a plusieurs ventilateurs (13, 14, 15), est associé à une région de la couchette, en particulier une région de tête, une région du dos et une région des pieds, et
**en ce que** chaque ventilateur (13, 14, 15) peut être réglé séparément en ce qui concerne sa fonction de ventilation, de refroidissement ou de chauffage ainsi que sa fonction de refoulement.

10. Cabine de conducteur comprenant une couchette et une installation de climatisation de véhicule selon la revendication 9, **caractérisée en ce que** les données préalables pour le réglage/la commande (20) peuvent être sélectionnées individuellement par le biais d'un module de commande ou d'une commande à distance.

11. Véhicule utilitaire comprenant une cabine de conducteur et une installation de climatisation de véhicules (21) selon l'une quelconque des revendications précédentes.
